(19) Europäisches Patentamt

European Patent Office

Office européen des brevets

(11) **EP 3 786 427 A1**

(12) **EUROPEAN PATENT APPLICATION**

(43) Date of publication:
03.03.2021 Bulletin 2021/09

(21) Application number: 20188511.8

(22) Date of filing: 30.07.2020

(51) Int Cl.:
*F02C 7/04* (2006.01)　　　*F02C 3/107* (2006.01)
*F02K 3/06* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.08.2019　GB 201912441

(71) Applicant: **Rolls-Royce plc**
**London N1 9FX (GB)**

(72) Inventors:
• **Lim, Chia Hui**
**Derby, Derbyshire DE24 8BJ (GB)**
• **Sheaf, Christopher**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **A GAS TURBINE ENGINE FOR AN AIRCRAFT COMPRISING AN AIR INTAKE**

(57)　A gas turbine engine for an aircraft comprises an engine core, a fan, an air intake and a gearbox. The engine core comprises a turbine, a compressor, and a core shaft connecting the turbine to the compressor. The fan is located upstream of the engine core and comprises a plurality of fan blades, the fan having a diameter greater than 2.0 m. The air intake is located upstream of the fan and has ratio of intake length to fan diameter of from 0.20 to 0.60. The gearbox receives an input from the core shaft and outputs drive to the fan so as to drive the fan at a lower rotational speed than the core shaft. The gas turbine engine has a bypass ratio greater than 10; and the air intake defines a highlight area, a throat area and a diffuser area, wherein the ratio of the highlight area to throat area is from 1.15 to 1.35 and the ratio of the diffuser area to throat area is from 0.85 to 1.15.

*FIG. 4*

## Description

### Field of the disclosure

The present disclosure relates to a gas turbine engine, more particularly a high-bypass geared gas turbine engine for an aircraft.

### Background

High-bypass turbofans are gas turbine driven fans where a large portion of the air driven by the fan bypasses the core contributing to thrust. High bypass ratio turbofans are generally considered to be turbofans with a bypass ratio equal to or greater than ten. Increasing the bypass ratio increases fuel economy and for a given thrust, reduces the noise emanating from the engine.

Geared turbofans are turbofans with a gearbox to reduce the rotation speed of the drive from the low-pressure shaft to rotate the fan at a slower rotational speed. A lower fan rotational speed allows a larger diameter fan to be used, thus, geared turbofans are one of a number of design features that may be used to achieve a high bypass ratio.

A high bypass geared gas turbine engine for an aircraft will typically comprise, from fore to aft: an intake through which airflow enters the engine; a fan which compresses air into the core of the engine and generates thrust via airflow that bypasses the core; a gearbox which receives drive from a shaft from the turbine section and reduces rotational speed for driving the fan; a compressor section which further compresses air entering the core; a combustor which mixes the compressed air with fuel and combusts it; and a turbine section through which the compressed air is expanded and work extracted, the output of which drives the fan and compressor section.

High-bypass ratio turbofans typically comprise fans with large diameters. Typically, turbofans with large fan diameters find use on mid-size commercial aircraft e.g. larger single aisle aircraft which may be aircraft with long range and/or higher capacity such as those over 200 seat capacity or a range of 3.5k nautical miles or greater. A large diameter fan may be considered as a fan with a diameter of approximately 2.0 m or greater. Large fans also have a large weight associated with them. Engines with large fans tend to have a centre of gravity positioned proportionally further forward along the length of the engine compared to engines with smaller diameter fans. The forward centre of gravity increases the difficulty of mounting the engine and accommodating the large moments therefrom on the wing.

Some high bypass turbofans with large fan diameters have various shortcomings and disadvantages. There is a need to address problems and disadvantages associated with large bypass turbofans with large fan diameters and to provide further improvements generally or at least to provide useful alternative gas turbine engines.

### Summary of the disclosure

The present disclosure provides a gas turbine engine for an aircraft as set out in the appended claims.

According to an aspect there is provided a gas turbine engine for an aircraft, the gas turbine engine comprising an engine core, a fan, an air intake and a gearbox. The engine core comprises a turbine, a compressor, and a core shaft connecting the turbine to the compressor. The fan is located upstream of the engine core and comprises a plurality of fan blades, the fan having a diameter greater than 2.0 m. The air intake is located upstream of the fan and has ratio of intake length to fan diameter of from 0.20 to 0.60. The gearbox receives an input from the core shaft and outputs drive to the fan so as to drive the fan at a lower rotational speed than the core shaft. The gas turbine engine has a bypass ratio greater than 10; and the air intake defines a highlight area, a throat area and a diffuser area, wherein the ratio of the highlight area to throat area is from 1.15 to 1.35 and the ratio of the diffuser area to throat area is from 0.85 to 1.15.

The diffuser area may be considered as the intake area at the mid-point along the spinner length.

The air intake of an aircraft gas turbine engine conditions airflow entering the engine. At low flight speed, it does this by first speeding up the airflow as it passes through the constriction of the throat, the air intake then slows the flow down in the diffuser region before it is taken through the fan. By speeding and slowing the airflow a more uniform distribution of airstream velocity is achieved before entering the fan. If airstream velocity varies across the diffuser area as it enters the fan, then forcing effects may occur which may cause oscillation of the load on the fan assembly. Further, at high angles of attack, incident airflow is more prone to flow separation over the lip of the air intake. Flow separation may lead to flow stagnation which in turn may increase the likelihood of an engine stall.

Aspects and embodiments described herein provide an air intake for high bypass geared turbofans with large fan diameters, where the air intake is able to maintain flow attachment in high angles of attack. It has been found that the specified ratios of highlight area , throat area and diffuser area, when applied to a fan of large diameter provides an air intake of low length per fan diameter that can be used without significant flow separation occurring on the air intake and with suitable flow conditioning for airflow upstream of the fan. In particular, a larger throat relative to the highlight area and narrower diffuser relative to the throat. This allows a shorter air intake to be used which moves the centre of gravity of the engine rearward. Also, the air intake lip typically contains heavy anti icing apparatus, reducing intake length therefore reducing the moment arm of the air intake. This significantly reduces stresses at the fan outlet guide vanes and also reduces peak loads which may be experienced in a fan blade-off event.

As fan blades are increased in size and rotated at the slower rotation speeds for use in high bypass geared fans, throat area increases in order to control the local diffuser angle and the local diffuser rate at the outer wall. This local shaping of the outer wall using the pressure field from fan could result in a "leaner ratio" of the diffuser area to throat area. This in turn allows a shorter air intake to be used without causing unacceptable levels of forcing effects on the fan or boundary layer flow separation over the lip of the air intake.

In some embodiments, the ratio of the highlight area to throat area may be from 1.18 to 1.30, or from 1.20 to 1.28, or any range formed from any of the preceding endpoints.

In some embodiments, the ratio between the diffuser area to throat area may be from 0.90 to 1.10, or from 0.97 to 1.03, or any range formed from any of the preceding endpoints.

In some embodiments, the ratio between the throat area to the fan face area of the fan may be from 0.94 to 1.05, or from 1 to 1.05, or from 1.02 to 1.04, or between a range of any combination of the preceding endpoints.

In some embodiments, the ratio of highlight area to diffuser area may be from 1.00 to 1.55, or from 1.00 to 1.45, or from 1.00 to 1.15, or any range formed from any of the preceding endpoints.

In some embodiments, the ratio between the highlight area to fan face area may be from 1.05 to 1.45.

In some embodiments, the fan diameter may be greater than 2.0 m, or from 2.2 m to 4.5 m or from 2.5 to 3.7 m, or any range formed from any of the preceding endpoints.

In some embodiments, the contraction ratio of the gas turbine engine may be from 1.10 to 1.35, or from 1.15 to 1.25, or from 1.23 to 1.35, or a range of any combination of the aforesaid end points.

In some embodiments, the local contraction ratio at bottom dead centre of the gas turbine engine may be from 1.20 to 1.35, or from 1.20 to 1.25, or from 1.25 to 1.35, or any range formed from any of the above endpoints.

In some embodiments, the local contraction ratio at the top dead centre of the gas turbine engine may be from 1.15 to 1.35, or from 1.15 to 1.25, or from 1.23 to 1.35, or any range formed from any of the preceding endpoints.

In some embodiments, the local contraction ratio at one or both lateral sides of the gas turbine engine may be from 1.15 to 1.35, or from 1.15 to 1.25, or from 1.23 to 1.35, or any range formed from any of the above endpoints.

In some embodiments, the ratio of the intake length to fan diameter may be from 0.20 to 0.60, or from 0.20 to 0.50, or from 0.25 to 0.45, or from 0.30 to 0.40, or any range formed from any of the preceding endpoints.

In some embodiments, the fan pressure ratio may be from 1.25 to 1.50, or from 1.30 to 1.45, or from 1.35 to 1.40, or any range formed from any of the preceding endpoints.

In some embodiments, at cruise, the quasi-non-dimensional mass flow rate Q may be in the range of from 0.029 $kgs^{-1}N^{-1}K^{1/2}$ to 0.036 $kgs^{-1}N^{-1}K^{1/2}$.

In some embodiments, the turbine is a first turbine, the compressor is a first compressor, and the core shaft is a first core shaft; and the engine core further may comprise a second turbine a second compressor, and a second core shaft connecting the second turbine to the second compressor; and the second turbine, second compressor, and second core shaft are arranged to rotate at a higher rotational speed than the first core shaft.

In some embodiments, the second core shaft may rotate from 2.5 to 4.2 times the rotational speed than the first core shaft.

In some embodiments, the gearbox may be positioned downstream of the fan.

In some embodiments, the gearbox may be positioned upstream of the compressor stages, and optionally, may be positioned adjacent to the low-pressure compressor.

In some embodiments, the gearbox may be positioned radially inwards of the airflow entrance to the engine core, specifically, the gearbox may be located radially inwards of the first stator or vane in the opening to the engine core.

In some embodiments, the gearbox is an epicyclic reduction gearbox.

The term "air intake" or "intake" as used herein refers to the portion of the gas turbine engine upstream of the fan. The air intake defines an internal volume between the fan and the highlight at the front and is circumferentially bounded by the diffuser walls within the nacelle.

The terms "bottom dead centre" and "top dead centre" as used herein refer to the bottommost and topmost circumferential positions around an engine axis respectively.

The term **"bulk diffuser ratio"** as used herein refers to the angle between a line from the throat to the fan outer casing at the same axial location as the fan blade tips leading edges, and the engine centreline axis.

The term **"contraction ratio"** as used herein refers to the ratio of the highlight area to the throat area.

The term **"diffuser area"** as used herein refers to the airflow area in the diffuser region. The diffuser area is the area perpendicular to the engine centreline axis and coincident with the mid-point of the length of the spinner, minus the spinner area at that point.

The term **"droop angle"** as used herein refers to the angle the intake centreline axis is inclined relative to the engine centreline axis.

The term **"fan area"** or **"fan case area"** as used herein refers in each case to the area bounded by the fan outer casing at the same axial location as the fan blade tips leading edges.

The term **"fan face area"** as used herein refers to the fan area minus the area occupied by the spinner or hub, whichever is the larger. The fan face area describes the area of the fan occupied by fan blades.

The term **"highlight"** as used herein refers to the forward most part of the air intake. The highlight may also be referred to as the lip or the leading edge of the air intake.

The term **"highlight area"** as used herein refers to the area bounded by the lip. It is also known as the inlet area.

The term **"highlight radius"** as used herein refers to the distance in the radial direction from the centre point of the highlight area to the lip. The centre point of the highlight area may be considered as the point of intersection between the highlight area and the intake centreline axis. Where the highlight radius varies around the circumference of the lip, the highlight radius may refer to the mean radius around the circumference.

The term **"intake centreline axis"** as used herein refers to the axis defining the centre of the intake. This may be considered as a linear axis extending from the centre point of the highlight area such that the axis is perpendicular to the highlight plane. The centre point of the highlight area may be the centre point of a line from the lip at top dead centre to bottom dead centre.

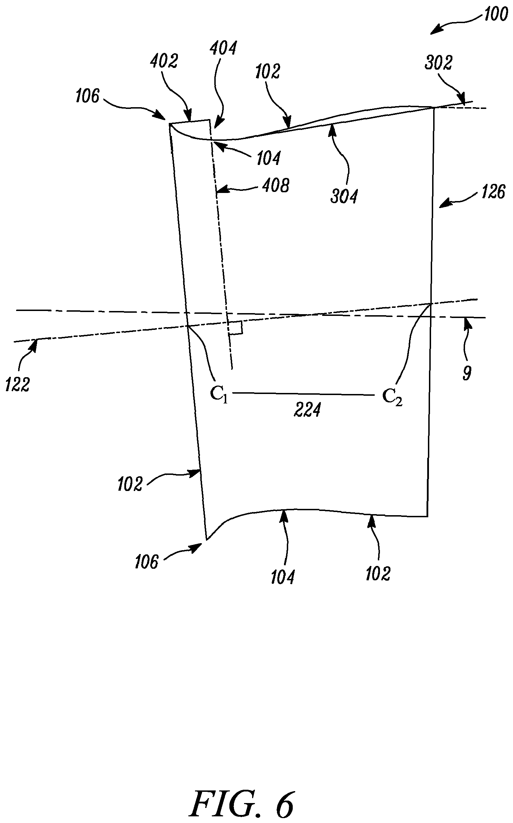

The term **"intake length"** as used herein refers to the linear distance from the intersection of the intake centreline axis with the highlight to the axial plane defined by the leading edges of the fan, i.e. the linear distance between point $C_1$ and point C2 indicated on Figure 6.

The term **"lip"** as used herein refers to the forward most part of the air intake. The lip may also be referred to as the highlight or the leading edge.

The term **"local contraction ratio"** as used herein refers to the ratio of the highlight radius to throat radius at a given circumferential position relative to the intake centreline axis.

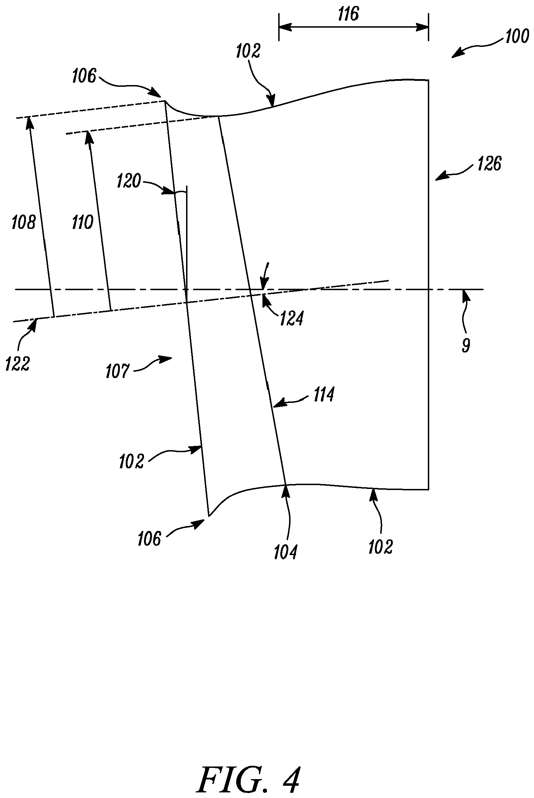

The term **"scarf angle"** as used herein refers to the angle between a line from the top dead centre lip to the bottom dead centre lip relative to a line perpendicular and vertically upwards from the intake centreline axis, for example as shown in Figure 4.

The terms **"sides"** or **"inboard and outboard sides"** as used herein in reference to an air intake refer to the lateral most circumferential positions around an engine axis respectively, where the lateral most positions are with reference to a horizontal plane.

The term **"throat"** as used herein refers to the annular constriction downstream from the lip. The throat may be considered as the locus points on the intake inner wall closest to the centreline axis.

The term **"throat area"** as used herein refers to the area bounded by the throat. The throat area may be represented by a three-dimensional surface which is the minimum surface area prescribed by the locus points defined by the minimum radius measured relative from the intake centreline axis. The intake centreline axis is perpendicular to the highlight area centre point. In general terms, the throat area represents the region where airflow would choke under such conditions.

The term **"throat radius"** as used herein refers may refer to minimum radius measured relative from the intake centreline axis. The intake centreline axis is perpendicular to the highlight area centre point.

The terms **"upstream"** and **"downstream"** as used herein refer to a position of an element of a gas turbine in relation to a second element, with reference to the direction of air flow i.e. an upstream element is encountered by airflow before a downstream element.

Unless otherwise defined, all terms (including technical and scientific terms) are to be given their ordinary and customary meaning to a person of ordinary skill in the art and are not to be limited to a special or customized meaning unless expressly so defined herein.

Terms and phrases used in this application, and variations thereof, especially in the appended claims, unless otherwise expressly stated, should be construed as open ended as opposed to limiting. As examples of the foregoing, the term 'including' should be read to mean 'including, without limitation,' 'including but not limited to,' or the like; the term 'comprising' as used herein is synonymous with 'including,' 'containing,' or 'characterized by,' and is inclusive or open-ended and does not exclude additional, unrecited elements; the term 'having' should be interpreted as 'having at least;' the term 'includes' should be interpreted as 'includes but is not limited to;' the term 'example' is used to provide exemplary instances of the item in discussion, not an exhaustive or limiting list thereof; adjectives such as 'known', 'normal', 'standard', and terms of similar meaning should not be construed as limiting the item described to a given time period or to an item available as of a given time, but instead should be read to encompass known, normal, or standard technologies that may be available or known now or at any time in the future; and use of terms like 'preferably,' 'preferred,' 'desired,' or 'desirable,' and words of similar meaning should not be understood as implying that certain features are critical, essential, or even important to the structure or function of the invention, but instead as merely intended to highlight alternative or additional features that may or may not be utilized in a particular embodiment of the invention.

Likewise, a group of items linked with the conjunction 'and' should not be read as requiring that each and every one of those items be present in the grouping, but rather should be read as 'and/or' unless expressly stated otherwise.

Similarly, a group of items linked with the conjunction 'or' should not be read as requiring mutual exclusivity among that group, but rather should be read as 'and/or' unless expressly stated otherwise.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 200 cm, 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity $U_{tip}$. The work done by the fan blades 13 on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values in this paragraph being dimensionless). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any bypass ratio greater than 10.

As used herein, the term **"bypass ratio"** may be defined as the ratio of the mass flow rate of the flow through the bypass duct to the mass flow rate of the flow through the core at cruise conditions.

In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg$^{-1}$s, 105 Nkg$^{-1}$s, 100 Nkg$^{-1}$s, 95 Nkg$^{-1}$s, 90 Nkg$^{-1}$s, 85 Nkg$^{-1}$s or 80 Nkg$^{-1}$s. The specific thrust may be in an inclusive range bounded by any two of the values in the previous sentence (i.e. the values may form upper or lower bounds), for example in the range of from 80 Nkg$^{-1}$s to 100 Nkg$^{-1}$s, or 85 Nkg$^{-1}$s to 95 Nkg$^{-1}$s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") may mean cruise conditions of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint). Such cruise conditions may be conventionally defined as the conditions at mid-cruise, for example the conditions experienced by the aircraft and/or engine at the midpoint (in terms of time and/or distance-) between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000 ft (11582 m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

**Brief description of the drawings**

Embodiments will now be described by way of example only, with reference to the Figures, in which:

**Figure 1** is a sectional side view of a gas turbine engine;

**Figure 2** is a close-up sectional side view of an upstream portion of a gas turbine engine;

**Figure 3** is a partially cut-away view of a gearbox for a gas turbine engine;

**Figure 4** is a schematic cross section view of an air intake for a gas turbine engine with the spinner omitted;

**Figure 5** is a schematic cross section view of an air intake for a gas turbine engine with the spinner included; and

**Figure 6** is a schematic cross section view of an air intake for a gas turbine engine with the spinner omitted.

The following table lists the reference numerals used in the drawings with the features to which they refer:

| No. | Feature | Figure |
|---|---|---|
| A | Core airflow | 1 |
| B | Bypass airflow | 1 |
| 9 | Principal rotational axis | 1, 2, 4,5, 6 |
| 10 | Gas turbine engine | 1 |
| 11 | Engine core | 1 |

(continued)

| No. | Feature | Figure |
|---|---|---|
| 12 | Air Intake | 1 |
| 14 | Low pressure compressor | 1 |
| 15 | High pressure compressor | 1 |
| 16 | Combustion equipment | 1 |
| 17 | High pressure turbine | 1 |
| 18 | Bypass exhaust nozzle | 1 |
| 19 | Low pressure turbine | 1 |
| 20 | Core exhaust nozzle | 1 |
| 21 | Nacelle | 1 |
| 22 | Bypass duct | 1 |
| 23 | Fan | 1,2 |
| 24 | Stationary support structure | 2 |
| 26 | Shaft | 1,2 |
| 27 | Shaft | 1 |
| 28 | Sun gear | 2, 3 |
| 30 | Epicyclic gearbox | 1,2,3 |
| 32 | Planet gear | 2, 3 |
| 34 | Planet carrier | 2,3 |
| 36 | Linkage | 2 |
| 38 | Ring gear | 2, 3 |
| 40 | Linkage | 2 |
| 100 | Air intake | 4, 5, 6 |
| 102 | Inner wall of nacelle | 4, 5, 6 |
| 104 | Throat | 4, 5, 6 |
| 106 | Lip (or highlight) | 4, 5, 6 |
| 107 | Highlight area | 4, 5, 6 |
| 108 | Highlight radius | 4 |
| 110 | Throat radius | 4 |
| 114 | Throat area | 4 |
| 116 | Diffuser region | 4 |
| 120 | Scarf angle | 4 |
| 122 | Intake centreline axis | 4, 6 |
| 124 | Intake droop | 4 |
| 126 | Fan face | 4, 5, 6 |
| 202 | Downstream end of nacelle | 1 |
| 204 | Spinner | 5 |
| 206 | Mid-point of spinner | 5 |
| 208 | Spinner area at mid-point of spinner | 5 |

(continued)

| No. | Feature | Figure |
|---|---|---|
| 210 | Length of spinner | 5 |
| 212 | Diffuser area | 5 |
| 220 | Spinner area at the fan face | 5 |
| 224 | Intake length i.e. linear distance between points C1 and C2 | 6 |
| 230 | Length of nacelle | 1 |
| 302 | Local diffuser angle | 6 |
| 304 | Line extending between the apex of the throat and the point where the fan face intersects the intake inner wall | 6 |
| 402 | Lip length | 6 |
| 404 | Lip height | 6 |
| 408 | Line perpendicular to the intake centreline axis passing through the throat | 6 |

**Detailed description**

Aspects and embodiments of the present disclosure will now be discussed with reference to the accompanying figures. Further aspects and embodiments will be apparent to those skilled in the art.

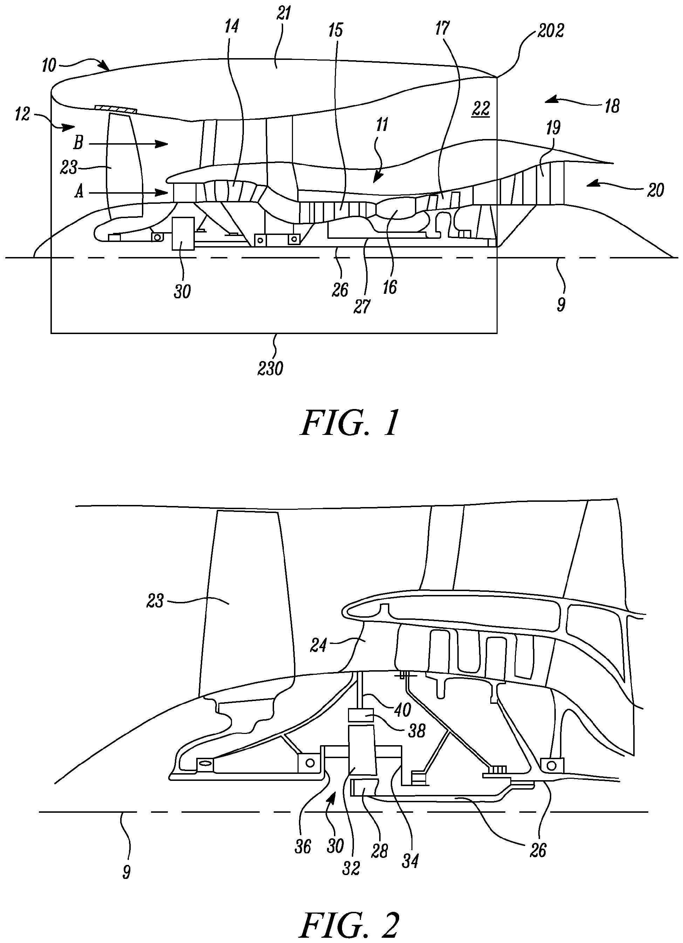

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. For the purposes of this disclosure, the gas turbine comprises a nacelle. The nacelle 21 surrounds or at least partially surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2.** The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

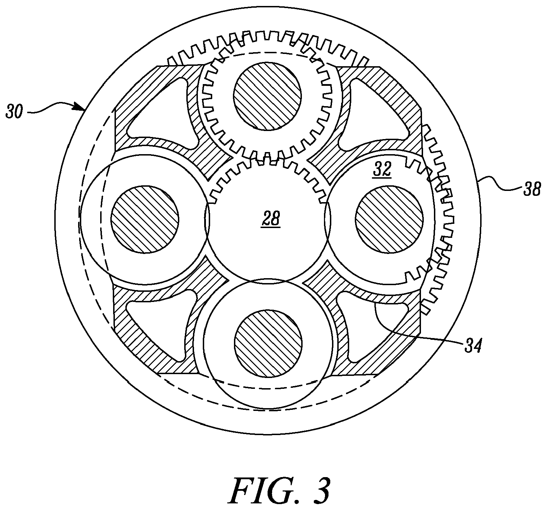

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Referring to **Figures 1, 4, 5 and 6** schematic cross sections of an air intake 100 of a gas turbine engine are shown. The cross sections extend through the engine centreline, the top dead centre and the bottom dead centre of the air intake. The air intake 100 is the part of the nacelle 21 upstream from the fan. The air intake 100 is shown bounded by the fan (roughly illustrated as line 126, which is the fan face of the fan 23) on the downstream side and by the inner walls 102 of the nacelle 21, which extend from the fan face 126 to the lip 106 of the air intake. The upstream end of the air intake 100 is open to allow airflow to enter in to engine via the air intake 100. The lip 106 is the upstream most portion of the air intake, also referred to as the highlight or leading edge. The lip 106 extends annularly around the air intake and defines the opening through which the airflow enters the air intake. The area of the opening defined by the annular lip is referred to as the highlight area 107. The highlight area 107 is the area through which air passes to enter the air intake, airflow outside of the highlight area passes around the exterior of the nacelle.

The air intake 100 has an intake centreline axis 122 which defines the centre of the air intake. The intake centreline axis may be coincident with the engine axis 9 or may be non-parallel with the engine centreline axis 9. The perpendicular distance from the intake centreline axis 122 to the lip defines the highlight radius 108. The highlight radius 108 is equivalent to ½ of the distance between diametrically opposed points on the lip 106. The highlight radius may not be constant around the circumference.

Moving in the downstream direction from the lip, the air intake narrows from the lip 106 to a minima, the minima defining the throat 104. The throat may be a circular or ellipsoid annulus around the interior of the air intake and defines a 2D area called the throat area 114. In some embodiments, the throat may not be purely circular or elliptical in shape and instead may vary irregularly in axial position around the circumference. In these embodiments, the throat area may be considered as the minimum area of the surface circumscribed by the throat. The distance from the centre of the throat area to the throat 104 is referred to as the throat radius 110. Where the throat 104 is not a circular annulus, the throat radius 110 is the shortest distance from the centroid of the throat area to the throat and may be expressed as an average value for measurements of throat radius around the circumference of the air intake 100.

Moving downstream from the throat 104, the air intake 100 widens towards the fan face 126 of the fan 23. This region is called the diffuser region (shown roughly as 116 in figure 4). As stated above, airflow enters the air intake 100 via the highlight area 107. The airflow speeds up as it flows through the constriction of the throat 104 before slowing down again as it passes into the diffuser region 116 before entering the fan. The fan may comprise a spinner 204 located within the diffuser region 116.

The contraction ratio is the ratio of the highlight area 107 to the throat area 114. The air intake may have a contraction ratio of from 1.10 to 1.35, or from 1.15 to 1.25, or from 1.23 to 1.35, or a range of any combination of the aforesaid end points.

The size of the throat 104 relative to the lip 106 may vary at different points around the circumference of the air intake 100, for example, the throat 104 may have a greater prominence from the lip 106 at the bottom dead centre of the air intake 100 than at the top dead centre or sides of the air intake. Differences in throat size around the air intake may be characterised by the local contraction ratio, which is the ratio of the highlight radius 108 to the throat radius 110 at an individual circumferential point on the air intake. For example, at the bottom dead centre, the local contraction ratio may be from 1.20 to 1.35, or from 1.20 to 1.25, or from 1.25 to 1.35 or a range of any combination of the aforesaid end points. The local contraction ratio at the top dead centre may be from 1.15 to 1.35, or from 1.15 to 1.25, or from 1.23 to 1.35 or a range of any combination of the aforesaid end points. The local contraction ratio at one or both sides of the air intake may be from 1.15 to 1.35, or from 1.15 to 1.25, or from 1.23 to 1.35, or any range formed from any combination of the aforesaid end points.

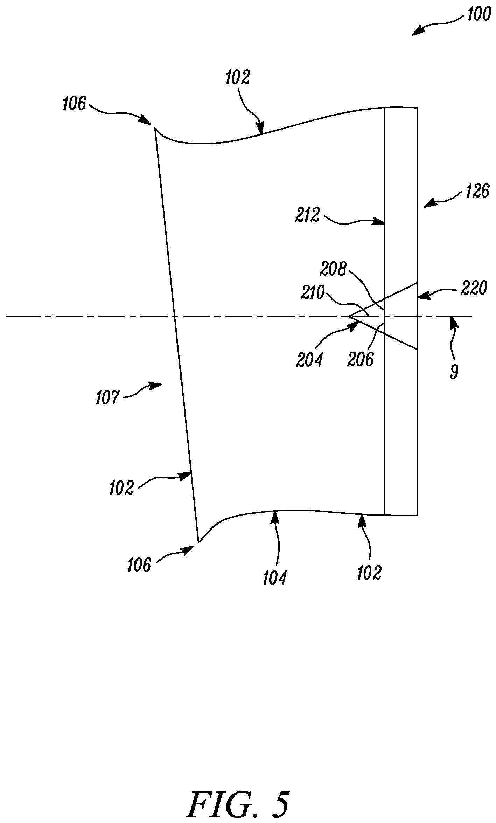

With reference to Figure 4, the diffuser region 116 is the region between the throat 104 and the fan face 126. The air intake generally widens from the upstream to downstream in the diffuser region, and the spinner 204 (Figure 5) typically occupies a part of the diffuser region around the downstream part of the engine centreline axis 9. The diffuser area 212 is a measure of the cross-sectional area of the air intake 100 in the diffuser region 116 where the air flows through. The diffuser area 212 is equivalent to the area perpendicular to the engine centreline axis 9, bounded by the inner walls 102 of the nacelle 21, measured coincident with the mid-point 206 of the length 210 of the spinner 204, minus the spinner area 208 at the mid-point 206. The length of the spinner 204 is measured parallel to the engine centreline axis 9, from the tip of the spinner to the base of the spinner.

The fan face area of an engine may be defined as the total area of a fan (i.e. the fan area) with the area of the spinner at the fan face (220) subtracted. E.g. Fan Face Area = $\pi/4$ $(D_{fancase}^2 - D_{spinner}^2)$, where $D_{fancase}$ is the fan outer casing diameter at the same axial location as the fan blade tips leading edges, $D_{spinner}$ is the diameter of the spinner at the same axial location . In some embodiments, the fan face area may be from 2.8 m$^2$ to 12 m$^2$; or from 4.5 m$^2$ to 10 m$^2$; or from 6 m$^2$ to 8 m$^2$, or a range of any combination of the aforesaid end points.

In some embodiments, the ratio of the throat area to fan face area may be from 0.94 to 1.05, or from 1 to 1.05, or from 1.02 to 1.04, or between a range of any combination of the preceding endpoints.

An air intake 100 may also be partially characterised by the ratio of the intake length 224 to the fan diameter (L/D). The intake length, where the air intake has a non-zero scarf and non-zero droop is equivalent to the distance along the intake centreline axis from the plane defined by the highlight to the axial plane defined by the leading edges of the fan. Alternatively, where the air intake has no droop and zero scarf, the intake length is equivalent to the distance from the centre point of the highlight area to the centre of the fan face area, which may be measured parallel to the intake centreline axis. In embodiments, the ratio of intake length to fan diameter may be from 0.20 to 0.60, or from 0.20 to 0.50, or from 0.25 to 0.45, or from 0.30 to 0.40, or a range of any combination of the aforesaid end points.

The gas turbine engine may comprise a nacelle 21 and the air intake 100 may be comprised as part of the nacelle 21. The nacelle 21 of the gas turbine 10 may have a length 230 of from 1.0 m to 5.0 m; or from 1.7 m to 3.5 m; or from 1.9 m to 3.0 m, or from 1.1 to 2.5m, or a range of any combination of the aforesaid end points. The length 230 of the nacelle 21 may be measured from highlight 106 to the downstream end 202 of the nacelle 21 at the bypass nozzle 18 as shown in Figure 1. The length 230 of the nacelle 21 is measured along the engine centreline axis 9 from the intersection of the engine centreline axis with the highlight, to the intersection of the engine centreline axis with a plane defined by the bypass nozzle exit 18.

The ratio of length of the nacelle 230 to fan diameter may be from 0.4 to 2.5, or from 1.2 to 2.0, or from 0.9 to 2.0, or from 0.9 to 1.8, or from 0.5 to 1.2, or a range of any combination of the aforesaid end points.

The ratio of the intake length 224 to the length of the nacelle 230 may be from 0.1 to 0.75, or from 0.15 to 0.5, or from 0.25 to 0.45, or a range of any combination of the aforesaid end points.

The nacelle 21 may have a ratio of the length of the nacelle 230 to the nacelle maximum diameter of 1 to 1.5, or 1.1 to 1.35 or 1.2 to 1.3 or a range of any combination of the aforesaid end points.

The air intake may comprise a non-zero droop or a droop of zero degrees. The intake droop 124 is the angle the intake centreline axis 122 is inclined at relative to the engine centreline axis 9. The air intake may have a droop angle from 0 to 6 degrees, or from 0 to 3 degrees.

The air intake 100 may comprise a non-zero scarf angle or a scarf angle of zero degrees. The scarf angle 120 is the angle between a line from the top dead centre lip to the bottom dead centre lip relative to a line perpendicular and vertically upwards from the intake centreline axis as shown in figure 4. The air intake may have a scarf angle from -15 degrees to +10 degrees, or from -5 degrees to +5 degrees. A negative scarf angle suggests the lip at bottom dead centre is further upstream from the fan than the lip at top dead centre. The scarf angle 120 shown in figure 4 is a positive scarf angle.

With reference to **Figure 6,** the lip 106 of the air intake 100 may have an aspect ratio which is defined by the ratio of the lip length 402 to lip height 404. Lip length 402 is defined by the distance from the lip 106, measured parallel to the intake centreline axis 122, to a line 408 perpendicular to the intake centreline axis passing through the throat 104. The lip height 404 is defined by the shortest distance from the minima of the throat 104 to a line from the lip 106 extending parallel to the intake centreline axis 122. The lip aspect ratio may be measured at individual circumferential points, for example, the lip at top dead centre may have an aspect ratio from 1.8 to 2.8, or from 1.8 to 2.5, or from 2.0 to 2.4, or from any combination of these end points. The lip at bottom dead centre may have an aspect ratio from 1.8 to 3.5, or from 1.8 to 3.2, or from 2.0 to 2.5, or from any combination of these end points. Lip aspect ratio may also be expressed as an average of points around the circumference of the air intake.

A quasi-non-dimensional mass flow rate Q for the gas turbine engine is defined as:

$$Q = W \frac{\sqrt{T0}}{P0.A_{fan}}.$$

where:

W is mass flow rate through the fan in kg/s;
T0 is average stagnation temperature of the air at the fan face in Kelvin;
P0 is average stagnation pressure of the air at the fan face in Pa;
$A_{fan}$ is the area of the fan face in $m^2$.

At engine cruise conditions the quasi-non-dimensional mass flow rate Q may be in the range of from 0.029 $kgs^{-1}N^{-1}K^{1/2}$ to 0.036 $kgs^{-1}N^{-1}K^{1/2}$.

At cruise conditions, the value of Q may be in the range of from: 0.0295 to 0.0335; 0.03 to 0.033; 0.0305 to 0.0325; 0.031 to 0.032 or on the order of 0.031 or 0.032. Thus, it will be appreciated that the value of Q may be in a range having a lower bound of 0.029, 0.0295, 0.03, 0.0305, 0.031, 0.0315 or 0.032 and/or an upper bound of 0.031, 0.0315, 0.032, 0.0325, 0.033, 0.0335, 0.034, 0.0345, 0.035, 0.0355 or 0.036 (all values in this paragraph being in SI units, i.e. $kgs^{-1}N^{-1}K^{1/2}$).

Cruise conditions may be conventionally defined as the conditions at mid-cruise, for example the conditions experienced by the aircraft and/or engine at the midpoint (in terms of time and/or distance) between top of climb and start of decent.

The local diffuser angle 302 is the angle relative to the engine centreline axis 9 of a line 304 extending between the apex of the throat 104 and the point where the fan face 126 of the fan 23 intersects the inner wall 102 of the nacelle 21, measured at particular circumferential point. Referring to figure 6, the local diffuser angle is illustrated for an individual circumferential point at top dead centre. In some embodiments, the local diffuser angle may vary around the circumference of the air intake. In some embodiments, the local diffuser angle at top dead centre may be from 0 to 18 degrees; or from 5 to 18 degrees. In some embodiments, the local diffuser angle at bottom dead centre may be from 0 to 18 degrees; or from 5 to 18 degrees. In some embodiments, the local diffuser angle at one or both lateral sides may be from 0 to 18 degrees; or from 5 to 18 degrees. At other circumferential points, the local diffuser angle can also be from 0 to 18 degrees, or from 5 to 18 degrees.

The bulk diffuser angle is the mean of the local diffuser angles 302 around the inner circumference of the air intake 100. In some embodiments, the bulk diffuser angle may be from 0 to 15 degrees; or from 3 to 15 degrees.

The local peak diffuser angle is the angle between the engine centreline axis 9 and a line tangent to the local surface in the diffuser region, such that it gives the largest angle between the diffuser and the engine centreline. In some embodiments, local peak diffuser angle may be from 0 to 22 degrees; or from 6 to 22 degrees.

It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

All numbers expressing quantities of ingredients, reaction conditions, and so forth used in the specification are to be understood as being modified in all instances by the term 'about.' Accordingly, unless indicated to the contrary, the numerical parameters set forth herein are approximations that may vary depending upon the desired properties sought to be obtained. At the very least, and not as an attempt to limit the application of the doctrine of equivalents to the scope of any claims in any application claiming priority to the present application, each numerical parameter should be construed in light of the number of significant digits and ordinary rounding approaches.

It will be understood that the invention is not limited to the embodiments above-described and various modifications and improvements can be made without departing from the concepts described herein within the scope of the following claims.

**Claims**

1. A gas turbine engine (10) for an aircraft, the gas turbine engine comprising:

   an engine core (11) comprising a turbine (19), a compressor (14), and a core shaft (26) connecting the turbine to the compressor;
   a fan (23) located upstream of the engine core, the fan comprising a plurality of fan blades and having a fan diameter greater than 2.0 m;
   an air intake (12) located upstream of the fan, the air intake having a ratio of intake length (224) to fan diameter of from 0.20 to 0.60;
   a gearbox (30) that receives an input from the core shaft (26) and outputs drive to the fan so as to drive the fan at a lower rotational speed than the core shaft;
   wherein the gas turbine engine has a bypass ratio greater than 10; and
   **characterised in that** the air intake defines a highlight area (107), a throat area (114) and a diffuser area (212), wherein the ratio of the highlight area to the throat area is from 1.15 to 1.35 and the ratio of the diffuser area to the throat area is from 0.85 to 1.15.

2. The gas turbine engine of claim 1, wherein the ratio of the highlight area (107) to the throat area (114) is from 1.18 to 1.30.

3. The gas turbine engine of claim 2, wherein the ratio of the highlight area (107) to the throat area (114) is from 1.20 to 1.28.

4. The gas turbine engine of any preceding claim, wherein the ratio of the diffuser area (212) to the throat area (114) is from 0.90 to 1.10.

5. The gas turbine engine of claim 4, wherein the ratio of the diffuser area (212) to the throat area (114) is from 0.97 to 1.03.

6. The gas turbine engine of any preceding claim, wherein the ratio of the throat area (114) to fan face area (126) of the fan (23) is from 0.94 to 1.05, or from 1 to 1.05, or from 1.02 to 1.04.

7. The gas turbine engine of any preceding claim, wherein the fan diameter is greater than 2.2 m.

8. The gas turbine engine of claim 7, wherein the fan diameter is from 2.5 m to 4.5 m.

9. The gas turbine engine of any preceding claim, wherein the contraction ratio of the gas turbine engine is from 1.10 to 1.35.

10. The gas turbine engine of any preceding claim, wherein the local contraction ratio at bottom dead centre of the gas turbine engine is from 1.20 to 1.35.

11. The gas turbine engine of any preceding claim, wherein the local contraction ratio at the top dead centre of the gas turbine engine is from 1.15 to 1.35.

12. The gas turbine engine of any preceding claim, wherein the local contraction ratio at one or both lateral sides of the gas turbine engine is from 1.15 to 1.35.

13. The gas turbine engine of any preceding claim, wherein the ratio of the intake length (224) to fan diameter is from 0.20 to 0.60, or from 0.20 to 0.50.

14. The gas turbine engine claim 13, wherein the ratio of the intake length (224) to fan diameter is from 0.25 to 0.45.

15. The gas turbine engine of claim 14, wherein the ratio of the intake length (224) to fan diameter is from 0.30 to 0.40.

**FIG. 1**

**FIG. 2**

## FIG. 3

*FIG. 4*

**FIG. 5**

FIG. 6

Europäisches
Patentamt

European
Patent Office

Office européen
des brevets

# EUROPEAN SEARCH REPORT

Application Number

EP 20 18 8511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/137685 A1 (UNITED TECHNOLOGIES CORP [US]) 12 September 2014 (2014-09-12) * paragraphs [0037], [0047] * * figures 3a,3b * | 1-10, 12-15 | INV. F02C7/04 F02C3/107 F02K3/06 |
| A | D C Howe ET AL: "energy efficient engine program advanced turbofan nacelle definition study", cleveland, 1 May 1985 (1985-05-01), pages 1-174, XP055621717, Retrieved from the Internet: URL:https://ntrs.nasa.gov/archive/nasa/casi.ntrs.nasa.gov/19900019244.pdf [retrieved on 2019-09-12] * figures 4.2-1, 4.2-4, 4.2-5 * * tables 4.1-I * * page 11, paragraph 4.2 * | 1-15 | |
| A | EP 2 148 062 A2 (ROLLS ROYCE PLC [GB]) 27 January 2010 (2010-01-27) * figure 4 * * page 5 * | 10-12 | TECHNICAL FIELDS SEARCHED (IPC) F02C F02K |

The present search report has been drawn up for all claims

| Place of search | Date of completion of the search | Examiner |
|---|---|---|
| The Hague | 15 January 2021 | Angelucci, Stefano |

EPO FORM 1503 03.82 (P04C01)

## ANNEX TO THE EUROPEAN SEARCH REPORT
## ON EUROPEAN PATENT APPLICATION NO.

EP 20 18 8511

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2021

| Patent document cited in search report | | Publication date | Patent family member(s) | | Publication date |
|---|---|---|---|---|---|
| WO 2014137685 | A1 | 12-09-2014 | EP | 2964924 A1 | 13-01-2016 |
| | | | EP | 3564507 A1 | 06-11-2019 |
| | | | US | 2016003145 A1 | 07-01-2016 |
| | | | WO | 2014137685 A1 | 12-09-2014 |
| EP 2148062 | A2 | 27-01-2010 | EP | 2148062 A2 | 27-01-2010 |
| | | | US | 2010019102 A1 | 28-01-2010 |

EPO FORM P0459

For more details about this annex : see Official Journal of the European Patent Office, No. 12/82